(19)

**Europäisches Patentamt**
**European Patent Office**
**Office européen des brevets**

(11) **EP 1 471 127 B1**

(12) **EUROPÄISCHE PATENTSCHRIFT**

(45) Veröffentlichungstag und Bekanntmachung des Hinweises auf die Patenterteilung:
**10.01.2007 Patentblatt 2007/02**

(21) Anmeldenummer: **04008183.8**

(22) Anmeldetag: **05.04.2004**

(51) Int Cl.:
*C09J 133/06* (2006.01)   *C08F 8/00* (2006.01)
*B05C 1/08* (2006.01)   *B05D 5/10* (2006.01)
*C09J 7/00* (2006.01)

(54) **Verfahren zur Vernetzung von Acrylatschmelzhaftklebemassen**

Process for crosslinking acrylate hot-melt adhesives

Procédé de réticulation des adhésifs thérmofusibles à base d'acrylate

(84) Benannte Vertragsstaaten:
**DE ES FR GB IT**

(30) Priorität: **25.04.2003 DE 10318993**

(43) Veröffentlichungstag der Anmeldung:
**27.10.2004 Patentblatt 2004/44**

(73) Patentinhaber: **tesa AG**
**20253 Hamburg (DE)**

(72) Erfinder:
• **Zöllner, Stephan, Dr.**
**21244 Buchholz/Nordheide (DE)**
• **Husemann, Marc, Dr.**
**22605 Hamburg (DE)**

(56) Entgegenhaltungen:
WO-A-00/47684   WO-A-01/70894
WO-A-20/04026922   US-A- 3 558 574
US-A- 5 296 561

**Beschreibung**

Die Erfindung betrifft ein Verfahren zur Vernetzung von Acrylatschmelzhaftklebemassen mit Wasser sowie eine Verwendung der so vernetzten Acrylatschmelzhaftklebemassen.

Die Gebrauchseigenschaften von Klebebändern werden ganz wesentlich von den Eigenschaften der Haftklebemasse (PSA) bestimmt. Diese besteht aus zumindest einem hochmolekularen Elastomer und gegebenenfalls einem oder mehreren die Klebrigkeit bestimmenden Harzen sowie weiteren Zusätzen zur Modifizierung der Eigenschaften, Verbesserung der Stabilität u.a. Für weitergehende Informationen über die Zusammensetzung, Herstellung und Eigenschaften der Klebebänder sei auf den Artikel "Tapes, Adhesive" in Ullmann's Encyclopedia of Industrial Chemistry, Sixth Edition, 2000 Electronic Release, Wiley-VCH, Weinheim 2000 hingewiesen.

Zur Herstellung der Klebebänder werden die Klebemassen in einer oder mehreren dünnen Schichten auf geeignete Trägermaterialien wie Folien, Papiere, Vliese, Gewebe u.a. aufgetragen. Dafür müssen sie in einen fließfähigen Zustand passender Viskosität überführt werden, was durch Auflösen in Lösungsmitteln, Dispergieren in Flüssigkeiten oder bei den sogenannten Hotmelts durch Aufschmelzen bei erhöhten Temperaturen erreicht werden kann. Anschließend werden diese Beschichtungen durch Verdampfen des Lösungs- oder Dispergiermittels oder durch Abkühlen der Hotmelts zum Haftkleber verfestigt. Insbesondere die Hotmelts, aber auch die übrigen Haftkleber verlieren durch Erhitzen wieder ihre Festigkeit, wodurch der Einsatzbereich begrenzt wird.

Das ist durch Vernetzung zu vermeiden, so daß hierdurch der Einsatzbereich der damit hergestellten Klebebänder erweitert wird. Unter Vernetzung werden alle Reaktionen verstanden, die zu einer chemischen Bindung zwischen den Polymerketten des Elastomers führen. Das kann durch chemisch oder strahlenchemisch ausgelöste Reaktionen erreicht werden. Letztere können durch UV-Strahlung oder durch energiereiche Strahlung wie beschleunigte Elektronen (ESH) initiiert werden. Die strahlenchemische Vernetzung über UV-Licht oder über Elektronenstrahlen ist apparativ sehr aufwendig und führt in der Regel im Vergleich zu der konventionellen thermischen Vernetzung zu einer geringeren Wärmescherfestigkeit bei hohen Temperaturen.
Die thermische Vernetzung besitzt dagegen den Nachteil, daß sehr große Energiemengen zur Verdampfung des Lösemittels sowie zur Initiierung der chemischen Reaktion erforderlich sind. Einen Ausweg könnte die Vernetzung mit Wasser bieten, welches in großen Mengen und sehr kostengünstig zugänglich ist.

In US 3,558,574 wurde z. B. die Vernetzung von Polyurethanen mit Feuchtigkeit beschrieben. In Adhäsion - Kleben und Dichten 32, S. 13-19 (1989) werden ebenfalls feuchtigkeitshärtende Polyurethanhaftklebestoffe beschrieben.

WO 01/70894 A beschreibt ein Verfahren zur Vernetzung einer Beschichtung von Haftklebesystemen auf einem Trägermaterial, wobei das auf dem Trägermaterial befindliche Haftklebesystem mittels chemischer oder bevorzugt strahlenchemisch ausgelöster Reaktionen vernetzt wird, das mit dem zu bestrahlenden Haftklebesystem beschichtete Trägermaterial über eine Walze läuft, sich während der Bestrahlung zwischen der Walze und dem Trägermaterial ein Kontaktmedium befindet.

WO 00/47684 A beschreibt ein Verfahren zur Herstellung einer Beschichtung von lösungsmittelfreien Haftklebesystemen auf insbesondere releasebeschichteten Substraten, wobei der Vorgang der Beschichtung über eine Walze läuft. Während sich das Haftklebesystem auf der Walze befindet, erfolgt eine Vernetzung des aufgelegten Kleb- stoffilms mit Hilfe von Elektronenstrahlen (ES), UV-oder IR-Strahlen.

Der Erfindung liegt die Aufgabe zugrunde, die Nachteile des Standes der Technik zu beseitigen. Insbesondere sollen ein einfacheres Verfahren zur Feuchtevernetzung von Acrylatschmelzhaftklebemassen sowie eine Verwendung der so vernetzten Acrylatschmelzhaftklebemassen angegeben werden.

Diese Aufgabe wird durch die Merkmale der Ansprüche 1 und 10 gelöst. Zweckmäßige Ausgestaltungen der Erfindung ergeben sich aus den Merkmalen der Ansprüche 2 bis 9.

Nach Maßgabe der Erfindung ist somit ein Verfahren zur Vernetzung einer Acrylatschmelzhaftklebemasse mit Wasser vorgesehen, wobei die Acrylatschmelzhaftklebemasse aus einer Copolymerzusammensetzung besteht, die zumindest 0,01 Gew.-% wenigstens eines Monomers mit einer funktionellen Gruppe umfaßt, die unter Einwirkung von Wasser eine chemische Vernetzung der Acrylatschmelzhaftklebemasse bewirkt, wobei es die Schritte

(a) Beschichten der zu vernetzenden Acrylatschmelzhaftklebemasse auf eine mit einem Kontaktmedium versehene, rotierende Walze, wobei das Kontaktmedium zu mindestens 50 % aus Wasser besteht, und
(b) Übertragen der Acrylatschmelzhaftklebemasse nach dem Kontakt mit dem Kontaktmedium auf der rotierenden Walze auf ein Trägermaterial umfasst,

dadurch gekennzeichnet, dass
als Acrylatschrnelzhattklebemasse eine Copolymerzusammensetzung eingesetzt wird, die

(A) 65 bis 99,99 Gew.-% Acrylsäure- und Methacrylsäure-Derivate der allgemeinen Formel $CH_2=C(R_1)(COOR_2)$, wobei $R_1$ H oder $CH_3$ darstellt und $R_2$ eine Alkylkette mit 1 bis 20 C-Atomen darstellt;

(B) 0 bis 35 Ges.-% Vinylverbindungen mit funktionellen Gruppen; und

(C) 0,01 bis 10 Gew.-% Acrylsäure-, Methacrylsäure- oder Acrylamid-Derivate, die zumindest eine Trialkoxysilangruppe besitzen, umfasst

Überraschend und für den Fachmann unvorhersehbar wurde somit gefunden, daß entsprechend vorteilhaft vorgegangen werden kann, indem man eine Acrylatschmelzhaftklebemasse auf eine mit Wasser benetzte Walze ablegt und dann von dort aus auf einen Träger kaschiert.

Erfindungsgemäß bevorzugt wird dieses Verfahren in einer Anlage durchgeführt, die eine Temperierwalze und ein Fluidauftragswerk für das Kontaktmedium vorsieht.

Sehr vorteilhaft geht man vor, indem die Walze temperiert wird. Im folgenden sei in allen Fällen, in denen nur von der Walze gesprochen wird, die Temperierwalze als eine der bevorzugten Ausführungsformen ausdrücklich mit eingeschlossen. Die Temperierung der Walze liegt dabei bevorzugt in einem Bereich von -10 °C bis 200 °C, ganz besonders bevorzugt von 5 °C bis 95 °C.

Als Walze dient gewöhnlich eine Metallwalze. Zur Verhinderung der Korrosion ist sie gewöhnlich mit einer Schutzschicht überzogen. Diese wird bevorzugt so ausgewählt, daß sie von dem Kontaktmedium gut benetzt wird. Vorteilhaft für das erfinderische Verfahren einzusetzende Walzen sind Stahlwalzen, insbesondere solche, welche eine Beschichtung zur Verbesserung der Korrosionsbeständigkeit und/oder der Benetzbarkeit tragen, wobei diese Beschichtungen bevorzugt aus Metallen (beispielsweise Chrom), Metalloxiden oder aus Keramik sind.

Das Kontaktmedium wird bei dem erfinderischen Verfahren vorteilhaft über ein Fluidauftragswerk auf die beschriebene Walze aufgetragen, es ist aber auch möglich, daß es berührungslos aufgebracht wird, zum Beispiel durch Aufsprühen.

Als erfindungsgemäßes Kontaktmedium wird eine Flüssigkeit verwendet, welche in der Lage ist, die Walzenoberfläche konstant zu benetzen und die als Film aufgetragene Acrylatschmelzhaftklebemasse auf der Walze zu stabilisieren, ohne daß diese mit der Walze verklebt.

Als erfindungsgemäß sehr vorteilhaft hat sich herausgestellt, als Kontaktmedium eine Flüssigkeit zu verwenden, die gegebenenfalls Additive für zusätzliche Funktionen enthält. Dazu gehören die Erhöhung der Benetzung und der elektrischen Leitfähigkeit und die Erhöhung der Reaktivität durch Zusatz eines Katalysators.

Als Kontaktflüssigkeit kann vorteilhaft reines Wasser eingesetzt werden, welches die erforderlichen Aufgaben der Erfindung zufriedenstellend erfüllt.

In einer weiteren Variante, welche im erfinderischen Sinne hervorragend geeignet ist, werden dem Kontaktmedium Substanzen zugesetzt, die darin zumindest teilweise löslich sind. Für Wasser als Kontaktmedium bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Glykole, Polyglykole, Ketone, Amine, Carboxylate, Sulfonate, wasserlösliche Cellulosederivate und dergleichen.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z. B. β-Di(hydroxyalkyl)sulfoniumsalz), weiterhin beispielsweise ethoxylierte Nonylphenylsulfonsäureammoniumsalze genannt. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Zur Erhöhung der Reaktivität werden dem Kontaktmedium Metallsalze hinzugefügt. In einer erfinderisch besonders zu bevorzugenden Auslegung werden dem Kontaktmedium Dibutylzinn-bis-2-ethylhexoat hinzugesetzt.

Zur Verbesserung der Eigenschaften des Kontaktmediums (beispielsweise zur Erhöhung der Scherresistenz, Verringerung der Übertragung von Tensiden oder dergleichen auf die Haftklebemassenoberfläche können dem Kontaktmedium und/oder den eingesetzten Zusatzstoffen weiterhin vorteilhaft Salze, Gele und ähnliche viskositätssteigernde Additive zugesetzt werden.

Für die Benetzung mit dem Kontaktmedium kann man in hervorragender Weise vorgehen, wenn eine zweite Walze (Antragswalze), vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der ersten Walze einen Film dieses Kontaktmediums aufträgt beziehungsweise aufstreicht. Auch andere Ausführungsformen des Auftragswerks sind realisierbar.

Im folgenden wird der Begriff "Walze" für die rotierende Walze (die auch temperiert sein kann) verwendet und die zweite Walze als Antragswalze bezeichnet. Eine im weiteren einzuführende dritte Walze (Andruckwalze) wird konsequent als Andruckwalze bezeichnet werden.

Das Heranführen der zu bestrahlenden Träger, d.h. der releasebeschichteten Materialien wie Papiere, Folien, Vliese (non wovens) und dergleichen, vergleiche weiter unten, ist vorteilhafterweise unter einem gewissen Andruck vorzunehmen. Hierdurch wird sichergestellt, daß einerseits keine Luftblasen zwischen der Trägerrückseite und der (ersten) Walze eingeschlossen werden, und andererseits die Menge der Kontaktflüssigkeit auf das notwendige Maß begrenzt wird.

Der Andruck kann durch Einstellung einer geeigneten Bahnspannung oder durch Anpressen bzw. Andrücken mit einer Andruckwalze erreicht werden.

Andruckwalzen können beispielsweise ebenfalls Stahlwalzen sein, geeignet sind weiterhin Keramikwalzen. Bevorzugt als Andruckwalze einzusetzen sind solche, welche aus elastischem Material gefertigt sind, insbesondere Gummiwalzen oder Silikongummiwalzen, oder solche, welche eine elastische beziehungsweise gummierte Oberfläche besitzen. Vorzugsweise beträgt die Gummihärte des Andruckwalzenmaterials oder der Andruckwalzenoberfläche 30 bis 100 shore (A), insbesondere 40 - 80 shore (A). Der Andruckwalzenbezug kann gemäß dem Stand der Technik aus EPDM, Viton oder Silikongummi oder anderen elastischen Materialien bestehen.

Weiterhin kann es für das erfindungsgemäße Verfahren sehr vorteilhaft sein, wenn das Kontaktmedium und/ oder die Walze und/oder die Oberfläche der Walze geerdet sind.

Des weiteren kann die Walze makroskopisch glatt oder eine gering strukturierte Oberfläche aufweisen. Es hat sich bewährt, wenn sie eine Oberflächenstruktur besitzt, insbesondere eine Aufrauhung der Oberfläche. Die Benetzung durch das Kontaktmedium kann dadurch verbessert werden.

In einer vorteilhaften Weiterentwicklung des erfinderischen Verfahrens wird das Kontaktmedium mittels eines Fluidauftragswerkes auf die Walze aufgetragen. Als sehr positiv für den Ablauf des erfindungsgemäßen Verfahrens hat es sich weiterhin herausgestellt, wenn auch das Fluidauftragswerk temperierbar ist.

Als mit diesem Verfahren in besonders vorteilhafter Weise vernetzbar lassen sich alle Acrylatschmelzhaftklebemasse einsetzen, die zumindest eine Trialkoxysilangruppe tragen. Als Acrylathaftklebemassen lassen sich elastomere Co-Polymere mit folgender Zusammensetzung einsetzen:

(A) Acrylsäure und Methacrylsäure-Derivate der allgemeinen Formel $CH_2=CH(R_1)(COOR_2)$ mit einem Anteil von 65 bis 99,99 Gewichtsprozent, wobei $R_1$ H oder $CH_3$ darstellt und $R_2$ eine Alkylkette mit 1 bis 20 C-Atomen darstellt,
(B) Vinylverbindungen mit funktionellen Gruppen (beispielsweise Malein-, Fumar- und/oder Itaconsäure, Maleinsäureanhydrid, Styrol, Styrol-Verbindungen, Vinylester, Acrylsäure, insbesondere Vinylacetat, Vinylalkohole, Vinylether, Acrylamide u. a.) mit einem Anteil von 0 bis 35 Gewichtsprozent,
(C) Acrylsäure- und Methacrylsäure- oder Acrytamid-Derivate mit einem Anteil von 0,01 bis 10 Gewichtsprozent, zumindest eine Trialkoxysilangruppe enthaltend, die mit Wasser eine chemische Vernetzung des Polymers initiiert.

Zur Polymerisation werden die Monomere dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des Handbook of Pressure Sensitive Adhesive Technology" von Donatas Satas (van Nostrand, New York 1989) besitzen. Zur Erzielung einer bevorzugten Glasübergangstemperatur $T_G$ der Polymere von $T_G \leq 10\,°C$ werden entsprechend dem vorstehend gesagten die Monomere sehr bevorzugt derart ausgesucht und die mengenmäßige Zusammensetzung der Monomermischung vorteilhaft derart gewählt, daß sich nach der Fox-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{W_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Auslegung werden für die Monomere A Acryl- oder Methacrylmomonere eingesetzt, die aus Acryl- und Methacrylsäureester mit Alkylgruppen bestehen, die 4 bis 14 C-Atomen, bevorzugt 4 bis 9 Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere, wie z. B. Isobutylacrylat, 2-Ethylhexylacrylat, 2-Ethylhexylmethacrylat, Isooctylacrylat, Isooctylmethacrylat. Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z. B. durch C1-6-Alkyl, Halogen oder Cyano. Spezifische Beispiele sind Cyclohexylmethacrylate, Isobornylacrylat, Isobornylmethacrylate und 3,5-Dimethyladamantylacrylat.

In einer bevorzugten Auslegung werden als Monomere B Monomere eingesetzt, die polare Gruppe wie Carboxyl, Sulfon- und Phosphonsäure, Hydroxy-, Lactam und Lacton, N-substituiertes Amid, N-substituiertes Amin, Carbamat-, Epoxy-, Thiol-, Ether, Alkoxy-. Cyan- oder ähnliches tragen.

Moderate basische Monomere B sind z. B. N,N-Dialkyl substituierte Amide, wie z. B. N,N-Dimethylacrylamid, N,N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Gycerylmethacrylat, 6-Hydroxyhexylmethacrylat, Vinylessigsäure, Methacrylsäure, Acrylsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Auslegung werden als Monomere B Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren bevorzugten Auslegung werden zu den beschriebenen Comonomeren Monomere B hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus C4 bis C18 bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Weiterhin können als Monomere B auch Photoinitiatoren mit einer copolymerisierbaren Doppelbindung eingesetzt werden. Als Photoinitiatoren sind Norrish I und II Photoinitiatoren geeignet. Beispiele sind z. B. Benzoinacrylat und ein acryliertes Benzophenon der Fa. UCB (Ebecryl P 36®). Diese Aufzählung ist nicht vollständig. Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend kann auf Carroy et al. in "Chemistry and Technology of UV and EB Formulation for Coatings, Inks and Paints", Oldring (Hrsg.), 1994, SITA, London verwiesen werden.

Als Monomere C werden Acrylsäure-, Methacrylsäure- bzw. Acrylamid-Derivate, die zumindest eine Trialkoxysilan-Gruppe besitzen verwendet In einer für das erfinderische Verfahren besonders bevorzugten Auslegung wird als Monomer C 3-Methacryloxypropyltrimethoxysilan eingesetzt.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Die mittleren Molekulargewichte $M_w$ der bei der radikalischen Polymerisation entstehenden Haftklebemassen werden sehr bevorzugt derart gewählt, daß sie in einem Bereich von 200.000 bis 4.000.000 g/mol liegen; speziell für die weitere Verwendung als Schmelzhaftkleber werden Haftklebemassen mit mittleren Molekulargewichten $M_w$ von 600.000 bis 800.000 g/mol hergestellt. Die Bestimmung des mittleren Molekulargewichtes erfolgt über Größenausschlußchromatographie (GPC) oder Matrix-unterstützte Laser-Desorptionllonisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Zur Herstellung von Polyacrylathaftklebemassen mit einer engen Molekulargewichtsverteilung eignen sich auch kontrollierte radikalische Polymerisationsmethoden. Zur Polymerisation werden dann bevorzugt ein oder mehrere Kontrollreagenzien zur Polymerisation eingesetzt.

Zur Herstellung von Haftklebebändern werden diese Acrylatschmelzhaftklebemassen optional mit Vernetzern abgemischt: Geeignete Vernetzersubstanzen in diesem Sinne sind insbesondere bi- oder multifunktionelle Acrylate, bi- oder multifunktionelle Epoxide, Metallchelate oder bi- oder multifunktionelle Isocyanate.

Weiterhin werden zur Herstellung von Haftklebemassen diese Polyacrylate optional mit zumindest einem Harz abgemischt.

Als zuzusetzende klebrigmachende Harze sind ausnahmslos alle vorbekannten und in der Literatur beschriebenen Klebharze einsetzbar, wenn sie zumindest eine teilweise Verträglichkeit mit dem Polymer aufweisen. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Die Acrylathaftklebemassen können des weiteren mit einem oder mehreren Additiven wie Alterungsschutzmitteln, Lichtschutzmitteln, Ozonschutzmitteln, Fettsäuren, Harzen, Weichmachern, Treibmitteln, Keimbildnern und Beschleunigern abgemischt sein.

Weiterhin können sie mit einem oder mehreren Füllstoffen wie Fasern, Ruß, Zinkoxid, Titandioxid, Mikrovollkugeln, Kieselsäure, Silikaten und Kreide gefüllt sein, wobei auch der Zusatz von blockierungsfreien Isocyanaten möglich ist.

Die Haftklebemasse wird sehr bevorzugt aus der Schmelze zur Vernetzung über eine mit dem Kontaktmedium versehene Walze geführt. Es wird Wasser verwendet, dessen Wirksamkeit durch Zusatz der oben beschriebenen Additive verbessert werden kann. Der Kontaktflüssigkeitsfilm auf der Walze gleicht dabei Unebenheiten der Walzenoberfläche und der Haftklebemasse aus und vermeidet so Hohlräume zwischen der Walze und der Haftklebemasse.

Zur Förderung der Vernetzungsgeschwindigkeit kann die Temperatur des Kontaktmediums erhöht bzw. die Verweildauer durch Verringerung der Prozeßgeschwindigkeit verringert werden.

Die auf der Walze mit Wasser in Kontakt gekommene Haftklebemasse wird anschließend als Hotmelt auf einen Träger (PP, BOPP, PET, Vlies, PVC, Polyester, Polyimid, Schaum etc.) oder Trennpapier (Glassine, HDPE, LDPE etc.) direkt aufgetragen oder laminiert.

Für die Vernetzung kann es von Vorteil sein, wenn nach der Beschichtung auf dem Träger nochmals die Haftklebemasse getempert wird. Dies kann z. B. durch UV-, Mikrowellenstrahler oder IR-Strahlern erfolgen. Dieses Nachtempern kann im inline-Prozeß oder offline bei Temperaturen bis zu 130 °C durchgeführt werden.

Die Haftklebemasse kann, falls erforderlich, zusätzlich mit UV- und/oder Elektronenstrahlen vernetzt werden. Diese zusätzliche Vernetzung kann vor der Beschichtung auf das Trägermaterial auf der Walze oder nach der Beschichtung auf das Trägermaterial erfolgen.

Eine erfindungsgemäße Verwendung des nach einem der vorangehenden Ansprüche hergestellten vernetzten Acrylatschmelzhaftklebemasse ist in besonders vorteilhafter Weise diejenige für ein Klebeband, wobei das Klebeband ein- oder beidseitig mit einer selbstklebenden Schicht ausgerüstet sein kann.

Das erfindungsgemäße Verfahren wird nachfolgend lediglich beispielhaft anhand einer Zeichnung näher erläutert. Dabei zeigt

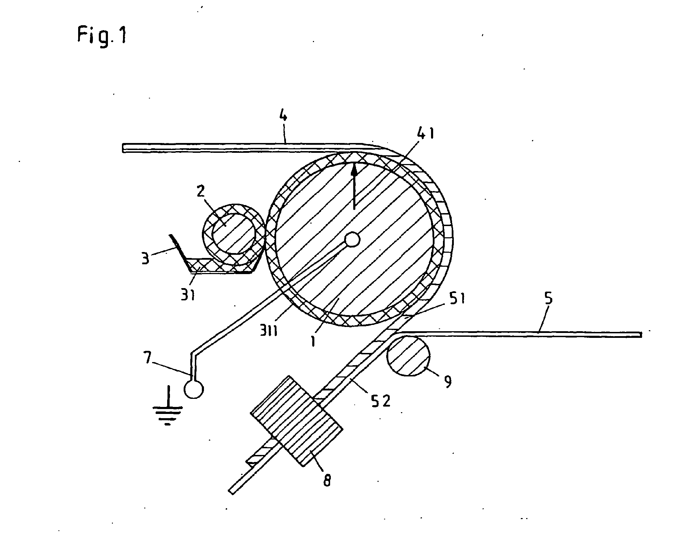

Fig. 1 eine Versuchsanordnung für die Wasser-Härtung der beschriebenen Haftklebebänder.

Die Temperierwalze 1 wird durch Kontakt mit einer zweiten Walze 2, welche sich zum Teil in einem Becken 3 mit dem Kontaktmedium 31 befindet, ebenfalls mit einem Film 311 des Kontaktmediums benetzt. Als Kontaktmedium 31 wird bevorzugt Wasser eingesetzt, dem optional die oben genannten Additive zugesetzt werden. Die Temperierwalze 1 kann zur Ausbildung eines stabilen Wasserfilms 311 eine strukturierte Oberfläche besitzen. Diese Oberfläche kann durch Aufrauhung, ähnlich den Verhältnissen bei einer Gravurwalze, erzielt werden, aber auch bei makroskopisch glatten Oberflächen ist durch die mikroskopische Oberflächenrauhigkeit eine hinreichende Benetzung mit dem Kontaktmedium 311 festzustellen.

An der Position 41 wird der Acrylatschmelzhaftklebemasse 4 auf den stabilen Wasserfilm 311 aufgelegt. Der Auflegepunkt 41 ist variabel, in der Darstellung wird die Acrylatschmelzhaftklebemasse 4 in der 12-Uhr-Position (Bezugszeichen 41) auf die Walze aufgelegt.

Die Schmelzhaftklebemasse 4 verläßt die Temperierwalze 1 in Position 51. Auch dieser Abnahmepunkt in variabel. Die Schmelzhaftklebemasse 4 wird mit dem Trägermaterial 5 abgenommen. Dies erfolgt bevorzugt mit einer Andruckwalze 9.

Zum zusätzlichen Ableiten der Ladung kann die Temperierwalze 1 geerdet sein (Bezugszeichen 7).

Nach erfolgter Vernetzung und dem Verlassen der Temperierwalze 1 durchläuft das Haftklebeband 52, das aus dem Trägermaterial 5 und dem darauf aufgebrachten vernetzten Acrylatschmelzhaftklebemasse 4 besteht, optional eine Erhitzungseinheit 8.

Die gezeigte Versuchsanordnung ist lediglich eine von vielen möglichen Ausführungsformen einer Vernetzungsanlage und soll die Erfindung nicht unnötig beschränken.

Zur Dokumentation der Erfindung wurden die nachfolgend dargestellten Versuchsreihen durchgeführt, ohne sich dabei durch die Wahl der Beispiele unnötig beschränken zu wollen.

Testmethoden

Scherstandzeiten (Test A)

Die Prüfung erfolgte gemäß PSTC-7. Auf eine 25 $\mu$m dicke PET-Folie wird eine 50 $\mu$m dicke Haftklebeschicht aufgebracht. Ein 1,3 cm breiter Streifen dieses Musters wird auf einem polierten Stahlplättchen auf einer Länge von 2 cm mit einer 2 kg-Rolle durch dreimaliges doppeltes Überrollen verklebt. Die Plättchen werden für 30 min unter Testbedingungen (Temperatur und Luftfeuchtigkeit), aber ohne Last äquilibriert. Dann wird das Testgewicht angehängt, so daß eine Scherbeanspruchung parallel zur Verklebungsfläche entsteht, und die Zeit gemessen, bis die Verklebung versagt. Ist eine Haltezeit von 10.000 min erreicht, so wird der Versuch vor Versagen der Klebbindung abgebrochen.

Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

Beschreibung der durchgeführten Versuche

*Herstellung der Acrylathaftklebemasse*

Beispiel 1

Ein für radikalische Polymerisationen konventioneller 10 L-Reaktor wurde mit 4 g Methacryloxypropyltrimethoxysilan, 19,8 g Maleinsäureanhydrid, 118,75 g N-tert.-Butylacrylamid, 905.3 g 2-Ethylhexylacrylat, 905.3 g n-Butylacrylat und 666 g Aceton/Isopropanol (97/3) befüllt. Nach 45 Minuten Durchleiten mit Stickstoffgas unter Rühren wurde der Reaktor auf 58 °C hochgeheizt und 0,6 g 2,2'-Azoisobuttersäurenitril (AIBN), gelöst in 20 g Aceton, hinzugegeben. Anschließend wurde das äußere Heizbad auf 70 °C erwärmt und die Reaktion konstant bei dieser Außentemperatur durchgeführt. Nach 45 min Reaktionszeit wurden 0,2 g Vazo 52® der Fa. DuPont, gelöst in 10 g Aceton, hinzugegeben. Nach 70 min Reaktionszeit wurden wiederum 0,2 g Vazo 52® der Fa. DuPont, gelöst in 10 g Aceton, hinzugegeben, nach 85 min Reaktionszeit 0.4 g Vazo 52® der Fa. DuPont, gelöst in 400 g Aceton/Isopropanol (97/3). Nach 1:45 h wurden 400 g Aceton/Isopropanol (97/3) hinzugegeben. Nach 2 h wurden 1,2 g 2,2'-Azoisobuttersäurenitril (AIBN), gelöst in 20 g Aceton, hinzugegeben. Nach 7, 8 und 10 h wurden jeweils 2 g Dicyclohexyldioxypercarbonat (Perkadox 16® , der Fa. Akzo Nobel), gelöst in jeweils 20 g Aceton, hinzugegeben. Nach 7 h Reaktionszeit wurde mit 600 g Aceton/Isopropanol (97/3) verdünnt. Die Reaktion wurde nach 24 h Reaktionszeit durch Abkühlen auf Raumtemperatur abgebrochen.

Beispiel 2

Ein für radikalische Polymerisationen konventioneller 10 L-Reaktor wurde mit 2 g Methacryloxypropyltrimethoxysilan, 19,65 g Maleinsäureanhydrid, 117,85 g N-tert.-Butylacrylamid, 998,5 g 2-Ethylhexylacrylat, 898,5 g n-Butylacrylat und 666 g Aceton/Isopropanol (97/3) befüllt. Nach 45 Minuten Durchleiten mit Stickstoffgas unter Rühren wurde der Reaktor auf 58 °C hochgeheizt und 0,6 g 2,2'-Azoisobuttersäurenitril (AIBN), gelöst in 20 g Aceton, hinzugegeben. Anschließend wurde das äußere Heizbad auf 70 °C erwärmt und die Reaktion konstant bei dieser Außentemperatur durchgeführt. Nach 45 min Reaktionszeit wurden 0,2 g Vazo 52® der Fa. DuPont, gelöst in 10 g Aceton, hinzugegeben. Nach 70 min Reaktionszeit wurden wiederum 0,2 g Vazo 52® der Fa.

DuPont, gelöst in 10 g Aceton, hinzugegeben, nach 85 min Reaktionszeit 0,4 g Vazo 52® der Fa. DuPont, gelöst in 400 g Aceton/Isopropanol (97/3). Nach 1:45 h wurden 400 g Aceton/Isopropanol (97/3) hinzugegeben. Nach 2 h wurden 1,2 g 2,2'-Azoisobuttersäurenitril (AIBN), gelöst in 20 g Aceton, hinzugegeben. Nach 7, 8 und 10 h wurden jeweils 2 g Dicyclohexyldioxypercarbonat (Perkadox 16® der Fa. Akzo Nobel), gelöst in jeweils 20 g Aceton, hinzugegeben. Nach 7 h Reaktionszeit wurde mit 600 g Aceton/Isopropanol (97/3) verdünnt. Die Reaktion wurde nach 24 h Reaktionszeit durch Abkühlen auf Raumtemperatur abgebrochen.

Verfahren

Zur Beschichtung aus der Schmelze wurden die in den Beispielen 1 und 2 erhaltenden Copolymere in einem Vakuumtrockenschrank langsam vom Lösemittel befreit.

Die Haftklebemassen wurden in einem Extruder der Firma Haake aufgeschmolzen und anschließend unter Druck durch eine Breitschlitzdüse mit einer Spaltenschlitzhöhe von 300 $\mu$m auf eine Stahlwalze beschichtet, die mit einem Kontaktmedium versehen war. Das Kontaktmedium bestand zu 95 % aus Wasser, zu 4 % aus Butanol und zu 1 % aus Dibutylzinn-bis-2-ethylhexoat. Die Temperatur des Kontaktmediums betrug während der Beschichtung 40°C. Die Acrylatschmelzhaftklebemasse wurde mit 135 °C Düsentemperatur beschichtet. Die Prozeßgeschwindigkeit betrug 2 m/min. Von der mit dem Kontaktmedium benetzen Stahlwalze wurde die Schmelzhaftklebemasse auf eine 23 $\mu$m dicke PET-Folie beschichtet. Der Haftklebemassenübertrag fand in der 5-Uhr-Position der Walze statt und der Masseauftrag betrug 50 g/m$^2$. Zur Nachalterung wurden die Haftklebemuster bei 60 °C für 24 h temperiert und somit die Schnellagerung simuliert. Zur Analyse wurden die Testmethoden A und B durchgeführt.

Ergebnisse

Die Ergebnisse der Versuche sind in der folgenden Tabelle 1 zusammengestellt.

Tabelle 1

| | SSZ in [Min.] nach Test A | Gelwert in [%] nach Test B |
|---|---|---|
| Beispiel 1 | 283 | 60 |
| Beispiel 2 | 165 | 58 |
| SSZ: Scherstandzeiten bei Raumtemperatur (ca. 23 °C) Masseauftrag: 50 g/m$^2$ | | |

Zur Überprüfung des Vernetzungsprinzips wurden die Gelwerte, d. h. der in Toluol nicht lösliche Anteil vernetzten Polymers bestimmt. Die Gelwerte um 60 % für Beispiel 1 und 2 beweisen, daß durch das erfinderische Verfahren Acrylatschmelzhaftklebemassen vernetzt werden können. Durch die Vernetzung lassen sich die entsprechenden Haftklebemassen auch für Haftklebebänder einsetzen. Die gemessenen Scherstandzeiten belegen, daß durch die Vernetzung eine Steigerung der Kohäsion möglich ist. Gegenüber unvernetzten Haftklebemassen besitzen die nach dem erfinderischen Verfahren hergestellten Muster eine bedeutend gesteigerte Kohäsion.

Es kann festgestellt werden, daß das erfinderische Verfahren hervorragend geeignet ist, die Acrylatschmelzhaftklebemasse schonend mit Wasser zu vernetzen und somit Probleme wie z. B. die Trägerschädigung durch Austrocknung oder durch aktinische Strahlung zu umgehen.

Die derart hergestellten und vernetzten Haftklebebänder sind für den technischen Einsatz sehr gut geeignet.

Liste der verwendeten Bezugszeichen

1      rotierende Temperierwalze

2      Antragswalze
3      Becken für Kontaktmedium 31
4      Acrylatschmelzhaftklebemasse 4
5      Trägermaterial
7      Erdung
8      Erhitzungseinheit
9      Andruckwalze
31     Kontaktmedium
41     Position, an der die Acrylatschmelzhaftklebemasse 4 auf die rotierende Temperierwalze 1 beschichtet wird
51     Position, an der die Acrylatschmelzhaftklebemasse 4 die rotierende Temperierwalze 1 verläßt
52     Haftklebeband, bestehend aus der Acrylatschmelzhaftklebemasse 4 und dem Trägermaterial 5
311    Film des Kontaktmediums auf der rotierende Temperierwalze 1

**Patentansprüche**

1.  Verfahren zur Vernetzung einer Acrylatschmelzhaftklebemasse mit Wasser, wobei die Acrylatschmelzhaftklebemasse aus einer Copolymerzusammensetzung besteht, die zumindest 0,01 Gew.-% wenigstens eines Monomers mit einer funktionellen Gruppe umfaßt, die unter Einwirkung von Wasser eine chemische Vernetzung der Acrylatschmelzhaftklebemasse bewirkt, wobei es die Schritte

    (a) Beschichten der zu vernetzenden Acrylatschmelzhaftklebemasse auf eine mit einem Kontaktmedium versehene, rotierende Walze, wobei das Kontaktmedium zu mindestens 50 % aus Wasser besteht, und
    (b) Übertragen der Acrylatschmelzhaftklebemasse nach dem Kontakt mit dem Kontaktmedium auf der rotierenden Walze auf ein Trägermaterial umfasst,

    **dadurch gekennzeichnet, dass**
    als Acrylatschmelzhaftklebemasse eine Copolymerzusammensetzung eingesetzt wird, die

    (A) 65 bis 99,99 Gew.-% Acrylsäure- und Methacrylsäure-Derivate der allgemeinen Formel $CH_2=C(R_1)$ $(COOR_2)$, wobei $R_1$ H oder $CH_3$ darstellt und $R_2$ eine Alkylkette mit 1 bis 20 C-Atomen darstellt;
    (B) 0 bis 35 Gew.-% Vinylverbindungen mit funktionellen Gruppen; und
    (C) 0,01 bis 10 Gew.-% Acrylsäure-, Methacrylsäure- oder Acrylamid-Derivate, die zumindest eine Trialkoxysilangruppe besitzen, umfaßt

2.  Verfahren nach Anspruch 1, **dadurch gekennzeichnet, daß** als Methacrylsäurederivat im Sinne der Komponente (C) 3-Methacryloxypropyl-trimethoxysilan eingesetzt wird.

3.  Verfahren nach Anspruch 1, **dadurch gekennzeichnet, daß** die rotierende Walze auf eine Temperatur in einem Bereich von -10 °C bis 200 °C temperiert ist.

4.  Verfahren nach Anspruch 1, **dadurch gekennzeichnet, daß** die rotierende Walze auf eine Temperatur in einem Bereich von 5 °C bis 150 °C temperiert ist.

5.  Verfahren nach einem der vorangehenden Ansprüche, **dadurch gekennzeichnet, daß** das Kontaktmedium mit einem oder mehreren löslichen oder teilweise löslichen Zusatzstoffen versetzt wird.

6.  Verfahren nach Anspruch 4, **dadurch gekennzeichnet, daß** das Kontaktmedium mit einem oder mehreren der Zusatzstoffe versetzt wird, die aus der Gruppe ausgewählt sind, die Alkylalkohole, Glykole, Ketone, Amine, Carboxylate, wasserlösliche Cellulosederivate, Sulfonate, Tenside und Zinn-organische Verbindungen umfaßt.

7.  Verfahren nach einem der vorangehenden Ansprüche, **dadurch gekennzeichnet, daß** die rotierende Walze eine Oberflächenstruktur aufweist.

8.  Verfahren nach einem der vorangehenden Ansprüche, **dadurch gekennzeichnet, daß** das Kontaktmedium mittels eines Fluidauftragswerks auf die rotierende Walze aufgebracht wird.

9.  Verfahren nach einem der vorangehenden Ansprüche, **dadurch gekennzeichnet, daß** das in Schritt (b) erhaltene, mit der Acrylatschmelzhaftklebemasse versehene Trägermaterial bei Temperaturen bis zu 130 °C nachgetempert wird.

10. Verwendung einer Acrylatschmelzhaftklebemasse, die nach einem der Ansprüche 1 bis 9 vernetzt und auf ein Trägermaterial übertragen worden ist, als Klebeband, wobei das Klebeband ein- oder beidseitig mit einer selbstklebenden Schicht ausgerüstet ist.

**Claims**

1. Process for crosslinking a pressure-sensitive acrylate hot-melt adhesive with water, said adhesive being composed of a copolymer composition comprising at least 0.01% by weight of at least one monomer having a functional group which on exposure to water brings about chemical crosslinking of said adhesive, said process comprising the steps of

   (a) coating the pressure-sensitive acrylate hot-melt adhesive to be crosslinked onto a rotating roller provided with a contact medium, said contact medium consisting at least 50% of water, and
   (b) transferring said adhesive, after contact with the contact medium on the rotating roller, to a backing material,

   **characterized in that**
   the pressure-sensitive acrylate hot-melt adhesive used is a copolymer composition which comprises

   (A) 65% to 99.99% by weight of acrylic acid derivatives and methacrylic acid derivatives of the general formula $CH_2=C(R_1)(COOR_2)$, $R_1$ being H or $CH_3$ and $R_2$ being an alkyl chain having 1 to 20 C atoms;
   (B) 0 to 35% by weight of vinyl compounds having functional groups; and
   (C) 0.01% to 10% by weight of acrylic acid derivatives, methacrylic acid derivatives or acrylamide derivatives which possess at least one trialkoxysilane group.

2. Process according to Claim 1, **characterized in that** 3-methacryloyloxypropyltrimethoxysilane is used as methacrylic acid derivative of component (C).

3. Process according to Claim 1, **characterized in that** the rotating roller is conditioned at a temperature in a range from -10°C to 200°C.

4. Process according to Claim 1, **characterized in that** the rotating roller is conditioned at a temperature in a range from 5°C to 150°C.

5. Process according to any one of the preceding claims, **characterized in that** the contact medium is admixed with one or more soluble, or partly soluble, additives.

6. Process according to Claim 4, **characterized in that** the contact medium is admixed with one or more of the additives selected from the group embracing alkyl alcohols, glycols, ketones, amines, carboxylates, water-soluble cellulose derivatives, sulphonates, surfactants and organotin compounds.

7. Process according to any one of the preceding claims, **characterized in that** the rotating roller has a surface texture.

8. Process according to any one of the preceding claims, **characterized in that** the contact medium is applied to the rotating roller by means of a fluid applicator.

9. Process according to any one of the preceding claims, **characterized in that** the backing material obtained in step (b), provided with the pressure-sensitive acrylate hot-melt adhesive, is subjected to subsequent conditioning at temperatures up to 130°C.

10. Use of a pressure-sensitive acrylate hot-melt adhesive crosslinked and transferred to a backing material in accordance with any one of Claims 1 to 9 as adhesive tape, the adhesive tape being equipped on one or both sides with a self-adhesive layer.

**Revendications**

1. Procédé de réticulation d'une masse autoadhésive thermofusible à base d'acrylate par de l'eau, dans lequel la masse autoadhésive thermofusible à base d'acrylate consiste en une composition de copolymère comprenant au moins 0,01% en poids d'au moins un monomère comportant un groupe fonctionnel qui, sous l'action d'eau, opère une réticulation chimique de la masse autoadhésive thermofusible à base d'acrylate, et comprenant les étapes suivantes :

   (a) couchage de la masse autoadhésive thermofusible à base d'acrylate à réticuler sur un rouleau tournant muni d'un milieu de contact, le milieu de contact étant composé d'eau à raison d'au moins 50%, et
   (b) transfert de la masse autoadhésive thermofusible à base d'acrylate, après le contact avec le milieu de contact sur le rouleau tournant sur un matériau de support,

   **caractérisé en ce que** l'on met en oeuvre en tant que masse autoadhésive thermofusible à base d'acrylate une composition de copolymère comprenant

   (A) de 65 à 99,99% en poids de dérivés d'acide acrylique et d'acide méthacrylique de la formule générale $CH_2=C(R_1)$ $(COOR_2)$, dans laquelle $R_1$ représente H ou $CH_3$ et $R_2$ une chaîne alkyle comportant de 1 à 20 atomes de C,
   (B) de 0 à 35% en poids de composés vinyliques comportant des groupes fonctionnels, et
   (C) de 0,01 à 10% en poids de dérivés d'acide acrylique, d'acide méthacrylique ou d'acrylamide, possédant au moins un groupe trialcoxysilane.

2. Procédé suivant la revendication 1, **caractérisé en ce que** l'on met en oeuvre en tant que dérivé d'acide méthacrylique au sens du composant (C) du 3-méthacryloxypropyltriméthoxysilane.

3. Procédé suivant la revendication 1, **caractérisé en ce que** le rouleau tournant est maintenu à une température de l'ordre de -10C° à 200°C.

4. Procédé suivant la revendication 1, **caractérisé en ce que** le rouleau tournant est maintenu à une température de l'ordre de 5°C à 150°C.

5. Procédé suivant l'une quelconque des revendications qui précèdent, **caractérisé en ce que** le milieu de contact est mélangé à un ou plusieurs additifs solubles ou partiellement solubles.

6. Procédé suivant la revendication 4, **caractérisé en ce que** le milieu de contact est mélangé à un ou plusieurs des additifs choisis dans le groupe comprenant les alcools alkyliques, glycols, cétones, amines, carboxylates, dérivés de cellulose solubles dans l'eau, sulfonates, tensioactifs et composés organostanniques.

7. Procédé suivant l'une quelconque des revendications qui précèdent, **caractérisé en ce que** le rouleau tournant présente une surface structurée.

8. Procédé suivant l'une quelconque des revendications qui précèdent, **caractérisé en ce que** le milieu de contact est appliqué sur le rouleau tournant via un dispositif d'application de fluide.

9. Procédé suivant l'une quelconque des revendications qui précèdent, **caractérisé en ce que** le matériau de support muni de la masse autoadhésive thermofusible à base d'acrylate, obtenu dans l'étape (b), est étuvé à des températures allant jusqu'à 130°C.

10. Utilisation d'une masse autoadhésive thermofusible à base d'acrylate, réticulée suivant l'une quelconque des revendications 1 à 9 et appliquée sur un matériau de support, en tant que ruban adhésif, le ruban adhésif étant muni d'une couche autoadhésive sur une ou sur les deux faces.

Fig.1